# EUROPEAN PATENT SPECIFICATION

(11) **EP 4 553 828 B1**
(45) Date of publication and mention of the grant of the patent: **08.07.2026**
(21) Application number: 22958217.6
(22) Date of filing: 08.09.2022
(51) Int. Cl.: G10L 15/28, G06F 1/3228, H02M 1/00, H02M 1/14, G06F 1/26, G06F 1/3234, G06F 1/3296, G10L 15/22

(54) **SPEECH RECOGNITION DEVICE AND OPERATING METHOD THEREOF**
SPRACHERKENNUNGSVORRICHTUNG UND BETRIEBSVERFAHREN DAFÜR
DISPOSITIF DE RECONNAISSANCE VOCALE ET SON PROCÉDÉ DE FONCTIONNEMENT

(43) Date of publication of application: 14.05.2025
(73) Proprietor: LG Electronics Inc., Yeongdeungpo-gu Seoul 07336 (KR)
(72) Inventor: CHO, Hanjin, Seoul 06772 (KR); SIM, Jaedoo, Seoul 06772 (KR); KIM, Kyungmin, Seoul 06772 (KR)
(74) Representative: Vossius & Partner Patentanwälte Rechtsanwälte mbB
(86) International application number: PCT/KR2022/013530
(87) International publication number: WO 2024/053762

(56) References cited:
- KR-A- 20140 089 822
- KR-A- 20160 113 255
- KR-A- 20200 129 315
- KR-A- 20220 008 617
- KR-A- 20220 008 617
- US-A1- 2015 221 307
- US-A1- 2023 152 874

## Description

### [Technical Field]

The present disclosure relates to a speech recognition device capable of recognizing speech.

### [Background Art]

Recently, the need for implementing speech recognition functions has increased with the use of artificial intelligence (Al) speakers or the like.

An Always Ready (AR) mode is a mode where speech recognition is always on standby.

Unlike the existing stand-by mode, the AR mode consumes more power than the existing stand-by mode because some circuits on the main board must be running at all times. KR 2022 0008617 A exemplarily represents the related art.

Conventional power boards perform burst operation to reduce power consumption of the power circuit in the standby mode.

In the case of burst operation, switching and resting periods occur alternately, causing the voltage and current ripples to increase.

Although there is a problem of noise generation in coils, switches, and multi-layer ceramic capacitors (MLCCs), in the normal standby mode, the current consumption is very low, less than 0.3 W or less and thus the noise is very low, so it does not cause problems in the field.

However, in the AR mode, the burst operation is the same as in standby mode, but power consumption increases, so noise problems due to voltage ripple and switching current occur.

At this time, it is difficult to improve noise with a simple circuit change, and there is a problem that the cost increases significantly if an electrolytic capacitor is added to reduce voltage ripple.

### [Disclosure]

### [Technical Problem]

An object of the present disclosure is to improve noise caused by burst operation of a power board in an Always Ready mode for speech recognition.

An object of the present disclosure is to improve the noise caused by burst operation of a power board in an Always Ready mode without significantly increasing the cost of components.

### [Technical Solution]

The invention is specified in the independent claims. Preferred embodiments are defined in the dependent claims. In the following description, although numerous features may be designated as optional, it is nevertheless acknowledged that all features comprised in the independent claims are not to be read as optional.

A speech recognition device according to an embodiment of the present disclosure may include a main board; and a power board receiving a signal from the main board to activate an Always Ready (AR) mode that always stands by for speech recognition, under a standby mode that periodically operates switching elements, and supplying a constant voltage to the main board according to the received signal, thereby continuously operating a plurality of switching elements.

An operating method of a speech recognition device including a main board and a power board according to an embodiment of the present disclosure may include operating the power board in a standby mode that periodically operates switching elements; under the standby mode, receiving a signal from the main board to activate an Always Ready (AR) mode that always stands by for speech recognition; and continuously operating a plurality of switching elements while supplying a constant voltage to the main board according to the received signal.

### [Advantageous Effect]

According to various embodiments of the present disclosure, noise generation in an Always Ready mode for speech recognition can be significantly reduced.

According to various embodiments of the present disclosure, noise generation can be significantly reduced with little increase in cost by using simple circuits in an Always Ready mode for speech recognition.

### [Description of Drawings]

FIG. 1 is a view illustrating the configuration of a speech recognition device according to an embodiment of the present disclosure.
FIG. 2 is a block diagram illustrating the configuration of a main board according to one embodiment of the present disclosure.
FIG. 3 is a block diagram illustrating the configuration of a power board according to an embodiment of the present disclosure.
FIG. 4 is a flowchart for explaining an operating method of a speech recognition device according to an embodiment of the present disclosure.
FIG. 5 is a pin table including information on a plurality of pins provided in a power supply for connection to a main board according to one embodiment of the present disclosure.
FIG. 6 is a view explaining the configuration of an AR mode switching circuit according to one embodiment of the present disclosure.
FIG. 7 is a view explaining the voltage supplied to the main board and the operating waveform of the switching element under a normal mode according to the prior art.
FIG. 8 is a view explaining the voltage supplied to the main board and the operating waveform of the switching element under a standby mode according to the prior art.
FIG. 9 is a view explaining the voltage supplied to the main board and the operating waveform of the switching element under standby mode according to the prior art.
FIG. 10 is a view explaining the voltage supplied to the main board and the operating waveform of the switching element when the AR mode on signal is detected in the standby mode according to the embodiment of the present disclosure.

### [Best Mode]

Hereinafter, embodiments related to the present disclosure will be described in more detail with reference to the drawings. The suffixes "module" and "part" used for components in the following description are given or used interchangeably only for the convenience of writing the specification, and do not have distinct meanings or roles in themselves.

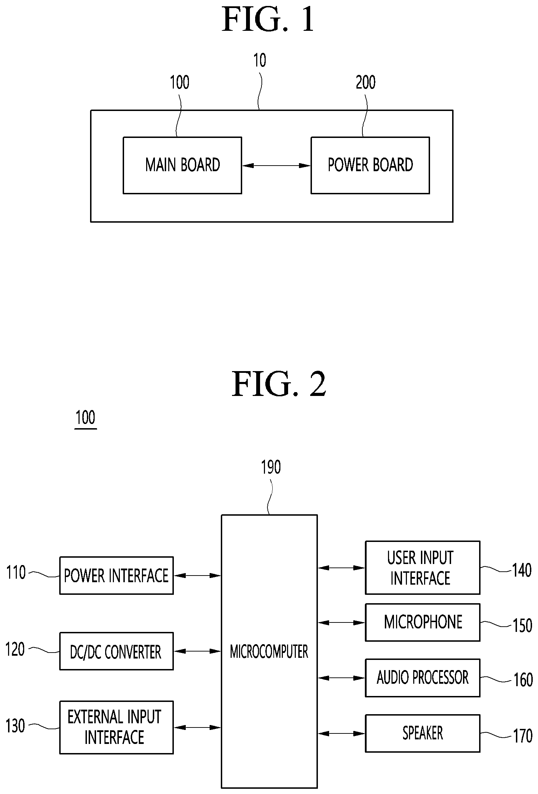

FIG. 1 is a view illustrating the configuration of a speech recognition device according to an embodiment of the present disclosure.

The speech recognition device 10 according to an embodiment of the present disclosure may be any one of a TV, an artificial intelligence speaker, a mobile terminal such as a smartphone/smart pad, but any electronic device capable of recognizing speech may be used.

Referring to FIG. 1, a speech recognition device 10 according to an embodiment of the present disclosure may include a main board 100 and a power board 200.

The main board 100 can receive power from the power board 200. According to the power mode of the power board 200, only some components or all components of the main board 100 can be activated.

The main board 100 can be connected to the power board via a wired cable.

The power board 200 can supply voltage or current through a cable connected to the main board 100.

The power board 200 can supply a voltage determined according to the power mode to the main board 100 and perform a switching operation according to the power mode.

Below, the power mode of the power board 200 may include a normal mode, a stand-by mode, and an always ready (AR) mode.

The normal mode may be a mode that continuously operates the switching elements included in the switching part 230 of the power board 200. Under the normal mode, the power board 200 may provide a first voltage to the main board 100. The first voltage may be 12V, but this is only an example.

Under the normal mode, burst operations are not performed and switching operations can be performed continuously.

The stand-by mode is a mode in which speech recognition is periodically put on standby and may be a mode in which power is periodically supplied to some components of the main board 100.

In standby mode, the power board 200 can operate the switching elements of the switching part 230 alternately between switching and resting periods to reduce power consumption.

Under standby mode, the power board 200 can supply a second voltage lower than the first voltage to the main board 100 to reduce power consumption. The first voltage may be 7.8 V, but this is only an example.

The operation of switching elements that alternate between switching and resting periods periodically can be referred to as a burst operation.

In the standby mode, power can be supplied only to the minimum components for controlling the power of the speech recognition device 10.

An Always Ready (AR) mode is a mode in which speech recognition is always on standby, and may be a mode in which power is always supplied to some components of the main board 100.

In the Always Ready mode, the power board 200 can supply a second voltage lower than the first voltage to the main board 100.

In the Always Ready mode, the power board 200 can continuously operate the switching elements included in the switching part 230 while supplying the first voltage to the main board 100.

In other words, the constant standby mode and normal mode may have the same switching operation of the switching elements, but there is only a difference in the magnitude of the voltage supplied to the main board 100.

For example, the Always Ready mode may be a mode in which power is always supplied to the microphone, audio processor, and microcomputer included in the main board 100 to always recognize speech.

Each component of the main board 100 and power board 200 may be provided in the form of an IC (Integrated Chip).

FIG. 2 is a block diagram illustrating the configuration of a main board according to one embodiment of the present disclosure.

Referring to FIG. 2, a main board 100 according to an embodiment of the present disclosure may include a power interface 110, a DC/DC converter 120, an external input interface 130, a user input interface 140, a microphone 150, an audio processor 160, a speaker 170, and a microcomputer 190.

Each component of the main board 100 may be provided in the form of an IC (Integrated Chip).

The power interface 110 may be an interface for receiving power from the power board 200.

The power interface 110 can receive voltage and current from the power board 200 through a cable.

The DC/DC converter 120 can regulate the voltage supplied from the power board 200 and supply the regulated voltage to each component of the main board 100.

A plurality of DC/DC converters 120 may be provided.

The external input interface 130 may be an interface for connection with an external device. The external input interface 130 may include one or more HDMI (High Definition Multimedia Interface) terminals and one or more USB (Universal Serial Bus) terminals.

The user input interface 140 can receive commands for controlling the speech recognition device 10 from a remote control.

The user input interface 140 may include one or more of an infrared module or a Bluetooth module.

The microphone 150 can receive a speech signal from outside.

The audio processor 160 can preprocess a speech signal received from outside.

The speaker 170 can output a response speech signal based on a speech signal.

The microcomputer 190 can control the overall operation of the speech recognition device 10.

The microcomputer 190 can generate an Always Ready (AR) mode on signal.

The microcomputer 190 can transmit an AR mode on signal to the power board 200 through the power interface 110.

The main board 100 may further include a short-range communication module, such as a WiFi module.

The main board 100 may further include a timing controller for driving a display panel connected to the main board 100.

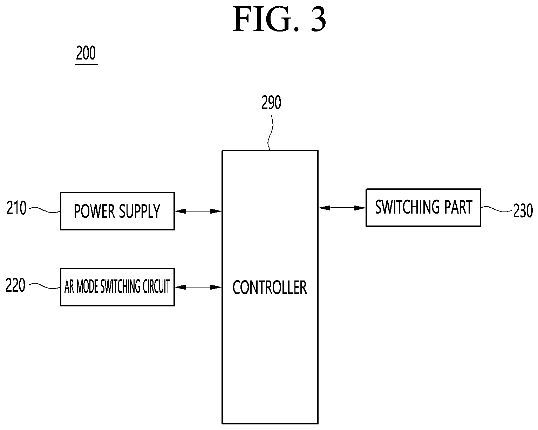

FIG. 3 is a block diagram illustrating the configuration of a power board according to an embodiment of the present disclosure.

Referring to FIG. 3, the power board 200 may include a power supply 210, an AR mode switching circuit 220, a switching part 230, and a controller 290.

The power supply 210 may be an interface for supplying power to the main board 100. The power supply 210 may include 24 pins. Any one of the 24 pins (AR mode input pin) may be for receiving an AR mode on signal.

The AR mode switching circuit 220 can convert an AR mode on signal received through an AR mode input pin into an optical output signal and transmit the converted optical output signal to the controller 290.

The controller 290 can detect the AR mode based on the received optical output signal.

The switching part 230 may include a plurality of switching elements. Each of the plurality of switching elements may be a transistor. The plurality of switching elements may generate current through a switching operation and supply the generated current to the main board 100.

The controller 290 can control the overall operation of the power board 200.

The controller 290 can check whether an AR mode on signal is detected through the AR mode input pin 211 under standby mode.

The controller 290 can continuously operate the switching elements at the voltage level of the standby mode when the AR mode on signal is detected.

The controller 290 can generate a voltage level supplied to the main board 100 in a flat form in standby mode and provide the generated flat voltage to the main board 100.

For this purpose, the controller 290 may further include a rectifier circuit that converts the voltage of the triangle wave into a flat form.

The controller 290 can control the switching part 230 so that the switching elements maintain switching operation while supplying a flat voltage to the main board 100.

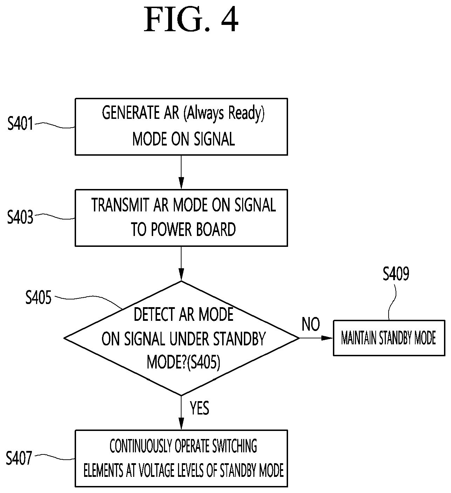

FIG. 4 is a flowchart for explaining an operating method of a speech recognition device according to an embodiment of the present disclosure.

**The microcomputer 190 of the main board 100 generates an Always Ready (AR) mode on signal (S401).**

In one embodiment, the microcomputer 190 can receive a command to operate in AR mode via the user input interface 140. For example, the user input interface 140 can receive a command to activate AR mode via a remote control.

The microcomputer 190 can generate an AR mode on signal upon receiving a command to operate in AR mode.

The AR mode on signal may be a signal to switch the power mode of the power board 200 to AR mode.

**The microcomputer 190 of the main board 100 transmits an AR mode on signal to the power board 200 through the power interface 110 (S403).**

The power interface 110 may include a cable connecting the main board 100 and the power board 200, and may transmit an AR mode on signal to the power supply 210 of the power board 200 through the cable.

**The controller 290 of the power board 200 checks whether an AR mode on signal is detected under standby mode (S405).**

The controller 290 may be operating in standby mode and may determine whether an AR mode on signal is detected through the power supply 210 under the standby mode.

The power supply 210 may include a plurality of pins for connection to the power interface 110 of the main board 100.

Among the plurality of pins, the reserved pin can be used to receive the AR mode on signal.

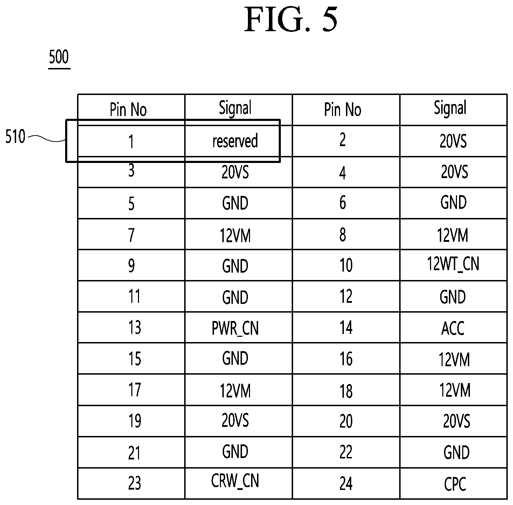

This is explained with reference to Fig. 5.

FIG. 5 is a pin table including information on a plurality of pins provided in a power supply for connection to a main board according to one embodiment of the present disclosure.

The pin table 500 may include information about 24 pins connecting the main board 100 and the power board 200.

The pin table 500 can include 24 pins, and each pin can display information about the applied driving voltage and information about the ground.

Among the 24 pins, pin 1 may be a pin to which no function is applied for future use.

In an embodiment of the present disclosure, pin 1 may be used to receive an AR mode on signal from the main board 100.

In other words, pin 1 can be used as a pin to receive the AR mode on signal.

Again, FIG. 4 is explained.

**When the controller 290 of the power board 200 detects an AR mode on signal, it continuously operates the switching elements at the voltage level of the standby mode (S407).**

In one embodiment, the controller 290 can determine whether an AR mode on signal has been received through the AR mode input pin 211 provided in the power supply 210.

When operation in AR mode is detected, the controller 290 can continuously operate the switching elements included in the switching part 230 while supplying the voltage level of the standby mode to the main board 100.

**The controller 290 of the power board 200 maintains the power mode in the standby mode when the AR mode on signal is not detected (S409).**

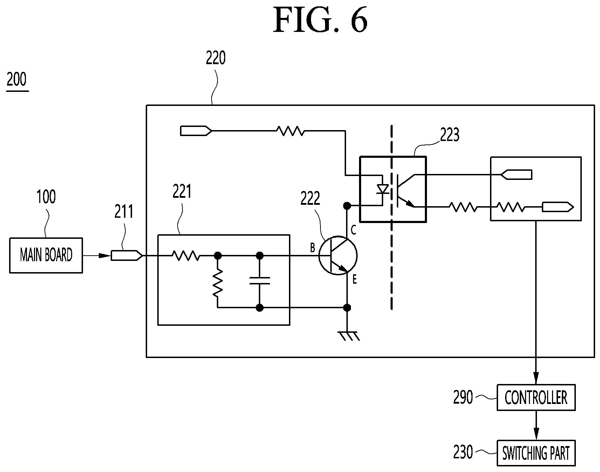

FIG. 6 is a view explaining the configuration of an AR mode switching circuit according to one embodiment of the present disclosure.

The AR mode switching circuit 220 of Fig. 6 may include a filter 221, a bipolar transistor 222, and a photocoupler 223.

The filter 221 can filter the AR mode on signal input from the main board 100 through the AR mode input pin 211.

The filter 221 may include one or more resistors and capacitors.

The bipolar transistor 222 can be turned on according to the AR mode on signal filtered by the filter 221.

A photocoupler 223 can transmit input electrical signals and output electrical signals as light by inserting an insulating material between a light-emitting element and a light-receiving element.

A photocoupler 223 can be used as an interface to transmit signals between circuits with different ground potentials.

When the controller 290 directly receives the AR mode on signal from the main board 100, the main board 100 and the power board 200 use different types of grounding, so excessive current may flow through the controller 290.

To prevent this, the photocoupler 223 can output an AR mode on signal or an AR mode off signal in the form of light.

The controller 290 can operate the power mode of the speech recognition device 10 in AR mode by detecting an AR mode on signal in the form of light.

The controller 290 can operate the power mode of the power board 200 in AR mode when the optical output signal of the photo coupler 223 indicates an AR mode on signal.

The controller 290 can operate the switching part 230 as in normal mode while supplying a second voltage to the main board 100 that is lower than the first voltage provided to the main board 100 under normal mode.

The AR mode switching circuit 220 illustrated in Fig. 6 is merely an example, and may have a circuit configuration in which an AR mode on signal is transmitted in the form of a magnetic field.

In other words, the AR mode switching circuit 220 may convert the AR mode on signal into an optical output signal through a photocoupler 223, or may convert the AR mode on signal into a magnetic field output signal through a transformer (not illustrated).

Next, the power modes according to the prior art and the AR mode according to the embodiment of the present disclosure are compared and explained.

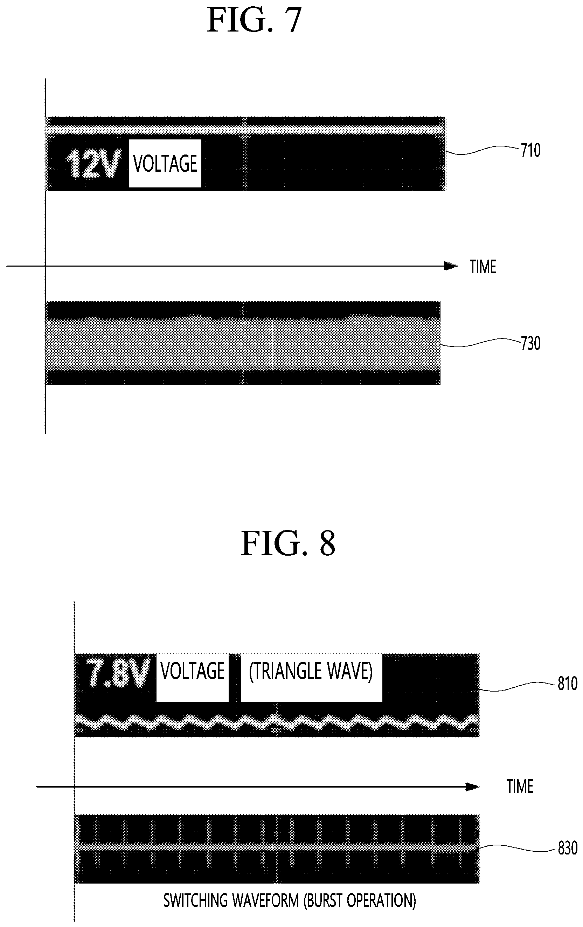

FIG. 7 is a view explaining the voltage supplied to the main board and the operating waveform of the switching element under a normal mode according to the prior art.

Referring to FIG. 7, waveforms of voltage and current supplied from the power board 200 to the main board 100 under the normal mode are illustrated.

The voltage waveform 710 is a 12V voltage in a flat form. The DC/DC converter 120 of the main board 100 can step down the voltage to 12V and supply it to each component of the main board 100.

The current waveform 730 continuously displays a peak waveform due to the continuous switching operation of the switching elements provided in the switching part 230.

In the normal mode, power consumption can range from tens to hundreds of watts.

FIG. 8 is a view explaining the voltage supplied to the main board and the operating waveform of the switching element under a standby mode according to the prior art.

Referring to FIG. 8, waveforms of voltage and current supplied from the power board 200 to the main board 100 under the standby mode are illustrated.

The voltage waveform 810 has a triangular wave or sawtooth wave shape with an average voltage of 7.8V. When the power board 200 is in standby mode, it can supply 7.8V, which is less than the 12V supplied in normal mode, to the main board 100.

The current waveform 830 is a peak waveform that appears periodically due to repeated operation (burst operation) of periodic switching operation and resting operation of the switching elements provided in the switching part 230.

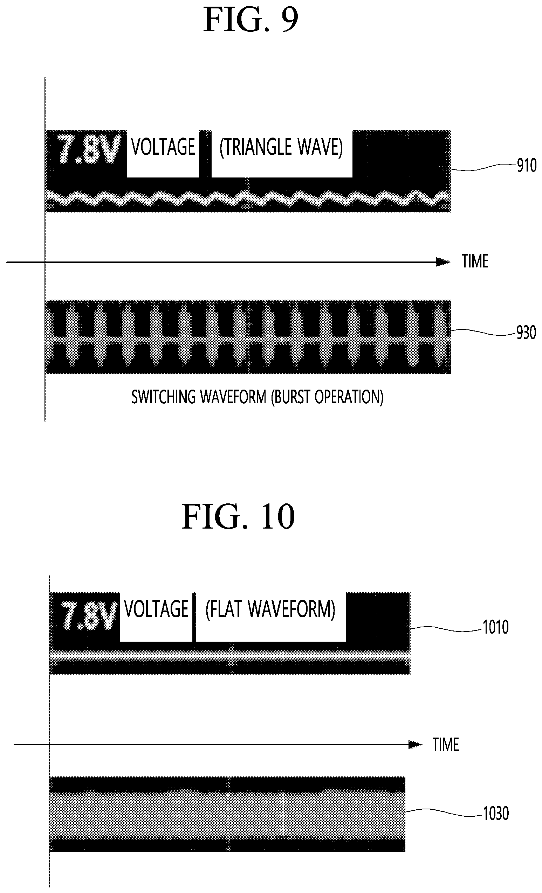

FIG. 9 is a view explaining the voltage supplied to the main board and the operating waveform of the switching element under standby mode according to the prior art.

Referring to FIG. 9, waveforms of voltage and current supplied from the power board 200 to the main board 100 under the conventional Always Ready mode are illustrated.

The voltage waveform 910 has a triangular wave or sawtooth wave shape with an average voltage of 7.8V. The voltage supplied to the main board 100 swings around 7 to 10V, and the voltage waveform 910 has a ripple component.

The current waveform 930 is a peak waveform that appears periodically due to repeated operation (burst operation) of periodic switching operation and resting operation of the switching elements provided in the switching part 230.

What is different from the standby mode is that the burst operation is performed, but the switching interval is longer so that power is continuously supplied to some components of the main board 100, so that the peak interval of the current waveform 930 increases.

Accordingly, in the conventional AR mode, there was a problem in that noise was generated significantly by the coils, switching elements, and MLCCs provided in the power board 200 due to voltage ripple and excessive current peaks.

FIG. 10 is a view explaining the voltage supplied to the main board and the operating waveform of the switching element when the AR mode on signal is detected in the standby mode according to the embodiment of the present disclosure.

The power board 200 can supply a voltage of 7.8V in a flat form to the main board 100 based on the AR mode on signal received from the main board 100. At the same time, the power board 200 can continuously operate the switching elements included in the switching part 230 similar to the switching operation of the normal mode, instead of the burst operation.

Accordingly, the voltage waveform 1010 may have a flat shape of 7.8 V, and the current waveform 1030 may have a shape with a reduced peak waveform.

In other words, when the power board 200 detects the AR mode through the AR mode input pin 211, the magnitude of the voltage supplied to the main board 100 is set to the level of the standby mode to produce a flat waveform, and the current peak waveform can be reduced by continuing the switching operation of the switching elements.

Accordingly, the noise of the components provided on the power board 200 can be reduced.

According to an embodiment of the present disclosure, noise improvement in AR mode can be achieved dramatically with almost no increase in cost by using an AR mode switching circuit 220.

The peak noise level measured under AR mode according to the prior art is 25 dB, but the peak noise level measured under AR mode according to the embodiment of the present disclosure is significantly improved to 18.4 dB.

According to one embodiment of the present disclosure, the method described above can be implemented as a processor-readable code on a medium in which a program is recorded. Examples of the processor-readable medium include a ROM, a RAM, a CD-ROM, a magnetic tape, a floppy disk, an optical data storage device, and the like.

The display device described above is not limited to the configuration and method of the embodiments described above, and the embodiments may be configured by selectively combining all or part of the embodiments so that various modifications can be made.

## Claims

1. A speech recognition device comprising:
a main board; and
a power board receiving a signal from the main board to activate an Always Ready, AR, mode that always stands by for speech recognition, under a standby mode that periodically operates switching elements, and supplying a voltage level of the standby mode to the main board according to the received signal, thereby continuously operating a plurality of switching elements to always supply power to some components of the main board related to speech recognition.

2. The speech recognition device of claim 1,
wherein the power board includes an AR mode input pin for receiving a signal for activating the AR mode.

3. The speech recognition device of claim 2,
wherein the power board further includes a photocoupler for converting a signal received through the AR mode input pin into an optical output signal, and detects operation in the AR mode based on the optical output signal received through the photocoupler.

4. The speech recognition device of claim 1,
wherein the constant voltage is the voltage level supplied to the main board in the standby mode, and
wherein the waveform of the constant voltage is a flat form.

5. The speech recognition device of claim 1,
wherein the main board receives a command for switching to the AR mode through user input and generates the signal for activating the AR mode according to the received command.

6. The speech recognition device of claim 1,
wherein the power board includes:
a switching part including the plurality of switching elements,
a power supply, which is an interface that supplies power to the main board.
an AR mode switching circuit converting the signal received from the main board; and
a controller switching the standby mode of the speech recognition device to the AR mode based on the converted signal.

7. The speech recognition device of claim 1,
wherein the power mode of the speech recognition device includes the standby mode, the AR mode, and a normal mode,
wherein the magnitude of the constant voltage supplied to the main board under the AR mode is the same as the magnitude of the voltage supplied to the main board in the standby mode, and
wherein operations of the plurality of switching elements under the AR mode is the same as the switching operation in the normal mode.

8. The speech recognition device of claim 1,
wherein the speech recognition device is either a TV, an Al speaker, or a smartphone.

9. An operating method of a speech recognition device including a main board and a power board comprising:
operating the power board in a standby mode that periodically operates switching elements;
under the standby mode, receiving a signal from the main board to activate an Always Ready, AR, mode that always stands by for speech recognition; and
continuously operating a plurality of switching elements while supplying a voltage level of the standby mode to the main board according to the received signal to always supply power to some components of the main board related to speech recognition.

10. The operating method of a speech recognition device of claim 9,
wherein the power board includes an AR mode input pin for receiving a signal for activating the AR mode.

11. The operating method of a speech recognition device of claim 10,
wherein the power board further includes a photocoupler for converting a signal received through the AR mode input pin into an optical output signal, and detects operation in the AR mode based on the optical output signal received through the photocoupler.

12. The operating method of a speech recognition device of claim 9,
wherein the constant voltage is the voltage level supplied to the main board in the standby mode, and
wherein the waveform of the constant voltage is a flat form.

13. The operating method of a speech recognition device of claim 9, further comprising:
receiving a command for switching to the AR mode through user input by the main board; and
generating the signal for activating the AR mode according to the received command.

14. The operating method of a speech recognition device of claim 9, further comprising:
converting the signal received from the main board into an optical output signal or a magnetic field output signal; and
switching the standby mode of the speech recognition device to the AR mode based on the converted signal.

15. The operating method of a speech recognition device of claim 9,
wherein the power mode of the speech recognition device includes the standby mode, the AR mode, and a normal mode,
wherein the magnitude of the constant voltage supplied to the main board under the AR mode is the same as the magnitude of the voltage supplied to the main board in the standby mode, and
wherein operations of the plurality of switching elements under the AR mode is the same as the switching operation in the normal mode.

## Patentansprüche

1. Spracherkennungsvorrichtung, umfassend:
eine Hauptplatine; und
eine Stromversorgungsplatine, die von der Hauptplatine ein Signal empfängt, um einen Always-Ready-, AR-, Modus zu aktivieren, der stets für Spracherkennung in Bereitschaft steht, unter einem Bereitschaftsmodus, der Schaltelemente periodisch betreibt, und die gemäß dem empfangenen Signal einen Spannungspegel des Bereitschaftsmodus an die Hauptplatine liefert, wodurch eine Vielzahl von Schaltelementen kontinuierlich betrieben wird, um stets einigen Komponenten der Hauptplatine, die mit Spracherkennung in Zusammenhang stehen, Strom zuzuführen.

2. Spracherkennungsvorrichtung nach Anspruch 1,
wobei die Stromversorgungsplatine einen AR-Modus-Eingangspin zum Empfangen eines Signals zum Aktivieren des AR-Modus aufweist.

3. Spracherkennungsvorrichtung nach Anspruch 2,
wobei die Stromversorgungsplatine ferner einen Fotokoppler aufweist, um ein über den AR-Modus-Eingangspin empfangenes Signal in ein optisches Ausgangssignal umzuwandeln, und einen Betrieb im AR-Modus basierend auf dem über den Fotokoppler empfangenen optischen Ausgangssignal erkennt.

4. Spracherkennungsvorrichtung nach Anspruch 1,
wobei die konstante Spannung der Spannungspegel ist, der im Bereitschaftsmodus an die Hauptplatine geliefert wird, und
wobei die Wellenform der konstanten Spannung eine flache Form ist.

5. Spracherkennungsvorrichtung nach Anspruch 1,
wobei die Hauptplatine durch Benutzereingabe einen Befehl zum Umschalten in den AR-Modus empfängt und gemäß dem empfangenen Befehl das Signal zum Aktivieren des AR-Modus erzeugt.

6. Spracherkennungsvorrichtung nach Anspruch 1, wobei die Stromversorgungsplatine umfasst:
einen Schaltteil, der die Vielzahl von Schaltelementen umfasst,
eine Stromversorgung, die eine Schnittstelle ist, welche die Hauptplatine mit Strom versorgt,
eine AR-Modus-Schaltschaltung, die das von der Hauptplatine empfangene Signal umwandelt; und
eine Steuerung, die den Bereitschaftsmodus der Spracherkennungsvorrichtung basierend auf dem umgewandelten Signal in den AR-Modus umschaltet.

7. Spracherkennungsvorrichtung nach Anspruch 1,
wobei der Spannungsmodus der Spracherkennungsvorrichtung den Bereitschaftsmodus, den AR-Modus und einen Normalmodus umfasst,
wobei die Größe der konstanten Spannung, die im AR-Modus an die Hauptplatine geliefert wird, gleich der Größe der Spannung ist, die im Bereitschaftsmodus an die Hauptplatine geliefert wird, und
wobei Betriebe der Vielzahl von Schaltelementen im AR-Modus gleich dem Schaltbetrieb im Normalmodus sind.

8. Spracherkennungsvorrichtung nach Anspruch 1,
wobei die Spracherkennungsvorrichtung entweder ein TV-Gerät, ein Al-Lautsprecher oder ein Smartphone ist.

9. Verfahren zum Betrieb einer Spracherkennungsvorrichtung, die eine Hauptplatine und eine Stromversorgungsplatine umfasst, umfassend:
Betreiben der Stromversorgungsplatine in einem Bereitschaftsmodus, der Schaltelemente periodisch betreibt;
unter dem Bereitschaftsmodus, Empfangen eines Signals von der Hauptplatine, um einen Always-Ready-, AR-, Modus zu aktivieren, der stets für Spracherkennung in Bereitschaft steht; und
kontinuierliches Betreiben einer Vielzahl von Schaltelementen, während gemäß dem empfangenen Signal ein Spannungspegel des Bereitschaftsmodus an die Hauptplatine geliefert wird, um stets einigen Komponenten der Hauptplatine, die mit Spracherkennung in Zusammenhang stehen, Strom zuzuführen.

10. Verfahren zum Betrieb einer Spracherkennungsvorrichtung nach Anspruch 9,
wobei die Stromversorgungsplatine einen AR-Modus-Eingangspin zum Empfangen eines Signals zum Aktivieren des AR-Modus aufweist.

11. Verfahren zum Betrieb einer Spracherkennungsvorrichtung nach Anspruch 10,
wobei die Stromversorgungsplatine ferner einen Fotokoppler aufweist, um ein über den AR-Modus-Eingangspin empfangenes Signal in ein optisches Ausgangssignal umzuwandeln, und einen Betrieb im AR-Modus basierend auf dem über den Fotokoppler empfangenen optischen Ausgangssignal erkennt.

12. Verfahren zum Betrieb einer Spracherkennungsvorrichtung nach Anspruch 9,
wobei die konstante Spannung der Spannungspegel ist, der im Bereitschaftsmodus an die Hauptplatine geliefert wird, und
wobei die Wellenform der konstanten Spannung eine flache Form ist.

13. Verfahren zum Betrieb einer Spracherkennungsvorrichtung nach Anspruch 9, ferner umfassend:
Empfangen eines Befehls zum Umschalten in den AR-Modus durch Benutzereingabe durch die Hauptplatine; und
Erzeugen des Signals zum Aktivieren des AR-Modus gemäß dem empfangenen Befehl.

14. Verfahren zum Betrieb einer Spracherkennungsvorrichtung nach Anspruch 9, ferner umfassend:
Umwandeln des von der Hauptplatine empfangenen Signals in ein optisches Ausgangssignal oder ein Magnetfeldausgangssignal; und
Umschalten des Bereitschaftsmodus der Spracherkennungsvorrichtung in den AR-Modus basierend auf dem umgewandelten Signal.

15. Verfahren zum Betrieb einer Spracherkennungsvorrichtung nach Anspruch 9,
wobei der Spannungsmodus der Spracherkennungsvorrichtung den Bereitschaftsmodus, den AR-Modus und einen Normalmodus umfasst,
wobei die Größe der konstanten Spannung, die im AR-Modus an die Hauptplatine geliefert wird, gleich der Größe der Spannung ist, die im Bereitschaftsmodus an die Hauptplatine geliefert wird, und
wobei Betriebe der Vielzahl von Schaltelementen im AR-Modus gleich dem Schaltbetrieb im Normalmodus sind.

## Revendications

1. Dispositif de reconnaissance vocale, comprenant :
une carte principale ; et
une carte d'alimentation recevant de la carte principale un signal pour activer un mode Always Ready, AR, qui se tient toujours en attente pour la reconnaissance vocale, dans un mode veille qui fait fonctionner périodiquement des éléments de commutation, et fournissant à la carte principale un niveau de tension du mode veille selon le signal reçu, faisant ainsi fonctionner en continu une pluralité d'éléments de commutation afin de toujours fournir de l'énergie à certains composants de la carte principale liés à la reconnaissance vocale.

2. Dispositif de reconnaissance vocale selon la revendication 1,
dans lequel la carte d'alimentation comprend une broche d'entrée de mode AR pour recevoir un signal destiné à activer le mode AR.

3. Dispositif de reconnaissance vocale selon la revendication 2,
dans lequel la carte d'alimentation comprend en outre un photocoupleur pour convertir un signal reçu par l'intermédiaire de la broche d'entrée de mode AR en un signal de sortie optique, et détecte un fonctionnement dans le mode AR sur la base du signal de sortie optique reçu par l'intermédiaire du photocoupleur.

4. Dispositif de reconnaissance vocale selon la revendication 1,
dans lequel la tension constante est le niveau de tension fourni à la carte principale dans le mode veille, et
dans lequel la forme d'onde de la tension constante est une forme plate.

5. Dispositif de reconnaissance vocale selon la revendication 1,
dans lequel la carte principale reçoit une commande de commutation vers le mode AR par une entrée utilisateur et génère le signal destiné à activer le mode AR selon la commande reçue.

6. Dispositif de reconnaissance vocale selon la revendication 1, dans lequel la carte d'alimentation comprend :
une partie de commutation comprenant la pluralité d'éléments de commutation,
une alimentation électrique, qui est une interface fournissant de l'énergie à la carte principale,
un circuit de commutation de mode AR convertissant le signal reçu de la carte principale ; et
un contrôleur commutant le mode veille du dispositif de reconnaissance vocale vers le mode AR sur la base du signal converti.

7. Dispositif de reconnaissance vocale selon la revendication 1,
dans lequel le mode d'alimentation du dispositif de reconnaissance vocale comprend le mode veille, le mode AR et un mode normal,
dans lequel la valeur de la tension constante fournie à la carte principale dans le mode AR est identique à la valeur de la tension fournie à la carte principale dans le mode veille, et
dans lequel les opérations de la pluralité d'éléments de commutation dans le mode AR sont identiques à l'opération de commutation dans le mode normal.

8. Dispositif de reconnaissance vocale selon la revendication 1,
dans lequel le dispositif de reconnaissance vocale est soit un téléviseur, soit un haut-parleur d'IA, soit un smartphone.

9. Procédé de fonctionnement d'un dispositif de reconnaissance vocale comprenant une carte principale et une carte d'alimentation, comprenant :
le fonctionnement de la carte d'alimentation dans un mode veille qui fait fonctionner périodiquement des éléments de commutation ;
dans le mode veille, la réception d'un signal provenant de la carte principale pour activer un mode Always Ready, AR, qui se tient toujours en attente pour la reconnaissance vocale ; et
le fonctionnement en continu d'une pluralité d'éléments de commutation tout en fournissant à la carte principale un niveau de tension du mode veille selon le signal reçu afin de toujours fournir de l'énergie à certains composants de la carte principale liés à la reconnaissance vocale.

10. Procédé de fonctionnement d'un dispositif de reconnaissance vocale selon la revendication 9,
dans lequel la carte d'alimentation comprend une broche d'entrée de mode AR pour recevoir un signal destiné à activer le mode AR.

11. Procédé de fonctionnement d'un dispositif de reconnaissance vocale selon la revendication 10,
dans lequel la carte d'alimentation comprend en outre un photocoupleur pour convertir un signal reçu par l'intermédiaire de la broche d'entrée de mode AR en un signal de sortie optique, et détecte un fonctionnement dans le mode AR sur la base du signal de sortie optique reçu par l'intermédiaire du photocoupleur.

12. Procédé de fonctionnement d'un dispositif de reconnaissance vocale selon la revendication 9,
dans lequel la tension constante est le niveau de tension fourni à la carte principale dans le mode veille, et
dans lequel la forme d'onde de la tension constante est une forme plate.

13. Procédé de fonctionnement d'un dispositif de reconnaissance vocale selon la revendication 9, comprenant en outre :
la réception d'une commande de commutation vers le mode AR par une entrée utilisateur par la carte principale ; et
la génération du signal destiné à activer le mode AR selon la commande reçue.

14. Procédé de fonctionnement d'un dispositif de reconnaissance vocale selon la revendication 9, comprenant en outre :
la conversion du signal reçu de la carte principale en un signal de sortie optique ou un signal de sortie de champ magnétique ; et
la commutation du mode veille du dispositif de reconnaissance vocale vers le mode AR sur la base du signal converti.

15. Procédé de fonctionnement d'un dispositif de reconnaissance vocale selon la revendication 9,
dans lequel le mode d'alimentation du dispositif de reconnaissance vocale comprend le mode veille, le mode AR et un mode normal,
dans lequel la valeur de la tension constante fournie à la carte principale dans le mode AR est identique à la valeur de la tension fournie à la carte principale dans le mode veille, et
dans lequel les opérations de la pluralité d'éléments de commutation dans le mode AR sont identiques à l'opération de commutation dans le mode normal.
